# EUROPEAN PATENT APPLICATION

(11) **EP 1 541 028 A1**
(43) Date of publication of application: **15.06.2005**
(21) Application number: 03079043.0
(22) Date of filing: 12.12.2003
(51) Int. Cl.: A21D 13/00, A21D 2/36

(54) **Kit for preparing a pita bread savoury snack**

(71) Applicant: UNILEVER PLC, London EC4P 4BQ (GB)
(72) Inventor: Denekamp, Debora Unilever Bestfoods, 3071 JL Rotterdam (NL); Heijbroek, Linda Christina Unilever R&D, 3133 AT Vlaardingen (NL)
(74) Representative: Kan, Jacob Hendrik, Dr.

(57) **Abstract**

There is provided a kit of parts for preparing a pita bread savoury snack, comprising (a) one or more pieces of herb containing pita bread having a good ambient shelf life, and (b) a sealed container with additives for preparing a filling for said pita bread. Preferably, the kit further comprises a sealed container with salad sauce. The kit provides increased convenience to the consumer.

## Description

### Technical Field

This invention relates to the field of savoury snacks. More in particular, the invention relates to a pita bread savoury snack, especially to a kit for preparing such a pita bread savoury snack.

### Background of the invention

Pita bread, also known as pocket bread, is a common staple in Middle Eastern countries and, in recent years, has enjoyed an increasing popularity in other areas of the world. Pita bread has found a special popularity because it may conveniently be used for making sandwiches or savoury snacks or savoury meals. This is because the bread, when torn, forms a pocket which can be filled with meat, vegetables, cheese and other sandwich fixings. The pocket is formed between two outer layers, which are easily separated by the user. The relative thinness of the layers is another attractive aspect of the bread.

The double layer form characteristic of pita bread results from its baking process. In this process, a rolled, flat dough disk is baked in an extremely hot oven, typically in excess of 250°C, on a flat support surface. The extreme heat initially sears the top, bottom and edge surfaces of the dough disk, thus creating a crust that at least partially seals these surfaces. As the dough between the surfaces heats up and bakes, gas and steam are liberated from the dough. This gas and steam is generated faster than it can escape through the crust; thus, pressure is created within the dough disk and the disk inflates. The inflation process separates the upper and lower surfaces of the bread so that the upper and lower layers bake separate from each other.

As stated above, the popularity of pita bread has been steadily increasing in recent years. Unfortunately, a disadvantage of pita bread is its relatively short shelf-life of about 1 week for fresh bread to a maximum of about 3 months for gas packaged bread. After that, the bread becomes hard, stale and tasteless. Moreover, it is laborious to prepare savoury snacks based on pita bread at home because of the large number of ingredients and time consuming processing steps.

Various techniques have been developed to increase the shelf life of baked products. For example, preservatives, emulsifiers or other additives, such as enzymes or mixtures of enzymes, may be added to bread dough as anti-staling agents. Suitable enzymes are bacterial amylases or maltogenic amylases. WO-A-95/23515 discloses that the properties of dough or a baked product may be improved by adding an enzyme preparation comprising xylanase and amylase to the dough. It is stated that baked products of increased volume and improved softness, including improved crumb softness upon storage were obtained.

Each of these approaches has its own particular disadvantages and limitations and still does not provide the required convenience to the consumer.

It is an object of the present invention to enable the convenient preparation at home of a fresh pita bread based savoury snack having an attractive appearance and a good shelf life.

It has now been surprisingly found that the above object and other objects of the invention could be achieved in accordance with the present invention, by means of a kit of parts for preparing a pita bread savoury snack according to the invention, which comprises (a) one or more pieces of herb containing pita bread having a good ambient shelf life, and (b) a sealed container with additives for preparing a filling for said pita bread.

### Definition of the Invention

According to a first aspect, there is provided a kit of parts for preparing a pita bread savoury snack, comprising (a) one or more pieces of herb containing pita bread having a good ambient shelf life, and (b) a sealed container with additives for preparing a filling for said pita bread.

According to a second aspect, there is provided a process for producing the kit of parts.

### Detailed Description of the Invention

A first element of the kit of parts according to invention is the pita bread. It will be clear that, in the context of the present invention, the snack can also be used as a meal.

The pita bread is made preparing a dough, made from 60% flour, 32% water, 1% yeast and 1% salt. Preferably, the kneading process lasts at least 5 minutes. The resulting dough mass is divided into small balls of about 80 grams. After a short proofing time of 15 to 20 minutes the dough ball is rolled out to a flat dough disk and then baked in an extremely hot oven, in excess of 250°C, on a flat support surface. The hot oven creates a crust on the surface that seals the top, bottom and edges of the dough disk. As the dough between the surfaces heats up and bakes, gas and steam are liberated from the dough. This gas and steam cannot escape through the crust, initiation a pressure build up within the dough disk, and the disk inflates. This inflation process separates the upper and lower surface of the bread, creating a pocket inside the pita bread. The hot pita breads are cooled down and packed into a food grade foil.

In the following Table, the preferred dosages and dosage ranges of the ingredients are given as percentage by weight, based on the weight of the flour.

| Ingredient | normal dosage (% on flour) | | range (% on flour) |
|---|---|---|---|
| flour | (12% wheat flour) | 100 % | 95 - 110 % |
| water | | 53 % | 50 - 56 % |
| yeast (active) | | 3 % | 1 - 4 % |
| fat (soft) | | 1 % | 0.5 - 1.5 % |
| herb-mix | | 1.3 % | 0.9 - 1.6 % |
| pre-mix | | 5.1 % | 3.4 - 6.1 % |

The pre-mix for the dough has the following composition:

| Pre-mix Ingredient: | normal dosage | range |
|---|---|---|
| | (% on flour) | (% on flour) |
| salt | 2 % | 1.5 - 2.2 % |
| dextrose | 0.8 % | 0.6 - 1 % |
| enzyme (xylanase and amylase) | 150 ppm | 100 - 250 ppm |
| enzyme (glucose oxidase) | 150 ppm | 100 - 250 ppm |
| hydrocolloid (guar gum) | 0.5 % | 0.2 - 0.5 % |
| preservative (calcium propionate) | 0.8 % | 0.5 - 0.8 % |
| emulsifier (distilled monoglycerides) | 0.7 % | 0.3 - 1 % |
| emulsifier (diacetyl tartaric acid ester of mono-diglycerides) | 0.3 % | 0.3 - 0.6 % |

Preferably, the pita bread also comprises a seasoning or herb mix. The herbs are clearly visible in the bread and they give the pita bread an attractive, slightly darker appearance than usual for pita bread. A preferred herb mix is given below:

| | normal dosage: | range: |
|---|---|---|
| | (% on flour) | (% on flour) |
| rosemary (dried) | 0.25 % | 0.20 - 0.30 % |
| thyme (dried) | 0.25 % | 0.20 - 0.30 % |
| paprika red pieces (dried) | 0.8 % | 0.5 - 1.0 % |

We found that it was possible, through the addition of the pre-mix, to achieve a good shelf life, i.e. a shelf life of more than three months. Surprisingly, it proved to be possible to increase the shelf life of the pita bread of the invention up to even more than nine months. In contrast, the shelf life of other ordinary types of packaged bread is usually not more than three months. It is believed that the anti-oxidant activity of the rosemary in the herb-mix is especially beneficial for the good shelf life of the pita bread.

The shape of the pita bread is slightly elongated, whereby the ratio between the length and the width of the pita bread is between 1.2 to 4.0, preferably between 1.4 and 2.5. The maximum length is about 17 cm and the maximum width is about 13 cm. The pita bread has preferably a perforation along its short axis, more preferably in the middle of the bread, so that it can easily be broken by hand in two halves, without the use of a knife. Breaking the bread forms two pockets, which may conveniently be filled with the filling.

The second element of the kit of parts according to invention is the sealed container with additives for preparing a filling for the pita bread. The container may be a capsule, a sachet or a small bottle or any other sealed product form, suitable for keeping the ingredients fresh. The additives are preferably selected from dry spices, dry herbs, or a mixture thereof, for making a marinade. In a particularly preferred embodiment, the additives comprise oregano, ginger, onion or mixtures thereof.

Any suitable packing forms and packing material may be used such as for example flow wraps, cardboard, paper or plastic wrappers or foils. The pita bread is preferably packaged in a transparent foil under a CO₂ atmosphere. The ready baked pita bread can be stored at ambient temperature.

Preferably, the kit of parts of the invention additionally comprises a sealed container with salad sauce. The salad sauce preferably comprises dill, parsley, onion, cucumber flavour, pepper or mixtures thereof.

In the industrial bread manufacturing process, a bread dough is prepared by adding a bread improver composition incorporating fibres, enzymes, etc. to flour, by simply mixing before or after kneading the ingredients to from a dough.

According to a second aspect, there is provided a process for producing the kit of parts. The process for preparing the pita bread according to the invention comprises the following steps:
(1) making the pita bread; and
(2) sealing the pita bread
(3) packaging the sealed pita bread, together with a sealed container with additives for preparing a filling for said pita bread.

The pita bread is prepared by mixing and kneading the dough for the pita bread, proofing, forming, allowing to rest, optionally pricking and cutting, decorating, proofing, optionally portioning, packaging and storing, baking. Typically, the process comprises:
- preparing a dough by mixing and kneading;
- making dough balls of about 80 gram each;
- a proofing/rest period of 20 minutes;
- rolling the balls to make them flat and oval;
- 2nd proofing/rest period of 15 minutes;
- baking in a gas tunnel oven, at 280-300°C for at most 1 minute.

The dough used for making the pita bread of the invention may comprise 0.1 to 1.0% of an emulsifier selected from the group of diacetyl tartaric acid ester of glycerides (DATA), monoglycerides (DATEM), calcium or sodium stearoyl lactylate and an effective amount of an enzyme blend comprising amylase and xylanase. Preferred amounts of DATA and/or DATEM are 0.05 to 0.5%, most preferred are 0.1 to 0.3%.

Other emulsifiers known in the art may be added in addition to DATEM and/or DATA. Examples of such emulsifiers are mono- or diglycerides, polyoxyethylene stearates, sugar esters of fatty acids, polyglycerol esters of fatty acids, lactic acid esters of monoglycerides, acetic acid esters of monoglycerides, lecithin or phospholipids.

The enzymes used in dough compositions in accordance with the present invention are amylase and xylanase, preferably in a ratio of amylase to xylanase of 1 to 2 up to 10 to 1 by weight of the pure enzymes. A more preferred ratio of amylase to xylanase is 1 to 1 up to 4 to 1 by weight of the pure enzyme.

The enzymes used in accordance to the invention are used in an effective amount. These amounts can be determined by the skilled person and will generally be dependent on the type of enzymes and the concentration/activity of the enzymes in the dough composition. More preferred, a suitable amount will be 0.001 to 0.8% of a combination of amylase and xylanase. Preferred amounts are 0.002-0.05% xylanase and 0.002-0.05% amylase. Most preferred amounts are 0.005 to 0.025% xylanase and 0.005 to 0.035% amylase.

The amylases used according to the invention can one or more α-amylases and/or maltogenic amylase and/or β-amylase or combinations thereof. Examples of fresh-keeping amylases for the bakery industry are Novamyl™ (ex Novozymes) and Maxlife™ (ex Danisco).

In accordance with established practise in the baking art, one or more further enzymes may also be added to the flour or to the dough. Examples of such enzymes are pentosanase, hemicellulase or proteases.

Dough according to the invention will generally also comprise flour, water and optionally one or more leavening agents. Examples of suitable flour are whole meal, wheat flour, rye/wheat mixtures, high gluten flour or combinations thereof. Suitable leavening agents are, for example, yeast, baking powder, sodium carbonate, sodium hydrogen carbonate. The amount and ratio of flour, water and leavening agent will be determined by the person skilled in the art depending on the type of dough or bread is to be prepared. A typical dough according to the invention comprises 45-70% of flour, 45-20% water and up to 10% leavening agent.

In accordance with established practise in the baking art, the dough may optionally comprise one or more further components such as seeds, nuts, dried raisins, sultanas, milk powder, minerals, vitamins, gluten, granulated fat, anti-oxidants (e.g. ascorbic acid, potassium bromate, potassium iodate or ammonium persulfate), amino acids (e.g. cysteine), salt (e.g. sodium chloride, calcium acetate, sodium sulfate, calcium sulfate, calcium carbonate, sodium carbonate or sodium hydrogen carbonate), sugar, colourants, preservatives, flavours, and ion and zinc salts.

It is preferred that the bread improver is added such that the final dough comprises 0.001 to 0.8% amylase and xylanase and 0.05 to 0.5% emulsifier, preferably 0.1-0.3% emulsifier. Preferably the improver is added such that the final dough comprises, 0.002-0.05% xylanase and 0.002-0.05% amylase, most preferably comprising 0.005 to 0.025% xylanase and 0.005 to 0.035% amylase.

Unless otherwise stated, percentages are meant to refer to weight percentages. Percentages abbreviated with "%" are meant to refer to weight percentages based on the amount of flour used unless stated otherwise.

The invention will now be further explained by means of the following non-limiting examples.

### EXAMPLE 1

A good dough was made from 60% flour, 32% water, 1% yeast and 1 % salt. The dough bulk was divided into small balls of about 80 grams each. After a proofing time of 15-20 minutes the dough balls were rolled out to form flat dough disks. These discs were subsequently baked on a flat support surface in an extremely hot oven at a temperature of at least 280°C. The hot oven created a crust on the surface that seals the top, bottom and edges of the dough disk. The hot pita breads were cooled down and packed into a food grade foil.

### EXAMPLE 2

A marinade dry-mix was made from maltodextine, salt, union, ginger, cumin, oregano, rosemary and white pepper. The mix was packaged in sachets each containing 21 grams of the mix.

### EXAMPLE 3

The kit of parts for preparing a pita bread savoury snack contained of 3 pieces of seasoned pita bread with a prolonged shelf life, 1 sachet with a dry mix to prepare a marinade and 1 sachet with a dry mix to prepare for sauce. 350 gram of chicken fillet, 1 red paprika, 1 green apple and 150 grams of yoghurt were purchased separately.

First, 2 to 3 spoons of oil were added to the contents of the marinade-sachet in a bowl and very well mixed. The chicken fillet was cut into small parts and mixed with the marinade, and allowed to soak in for 7 minutes.

Then, the paprika and the green apple were cleaned and cut into little blocks. 150 gram of yoghurt was mixed with the sachet for the sauce.

The marinated chicken parts were baked into a frying pan on high temperature for 3 minutes. The paprika- and apple-blocks were added and the entire dish was baked for 2 minutes.

The three pieces of pita bread were heated in an oven for 3 minutes at 220°C and then cut in the middle on the perforation, creating 6 pockets. Finally, the pita bread pockets were filled with the meat mixture, and served with the yoghurt sauce. The thus prepared savoury snack was well liked by consumers and was found to be easy-to-make.

## Claims

1. Kit of parts for preparing a pita bread savoury snack, comprising (a) one or more pieces of herb containing pita bread having a good ambient shelf life, and (b) a sealed container with additives for preparing a filling for said pita bread.

2. Kit of parts according to any preceding claim, wherein the additives are selected from dry spices, dry herbs, or a mixture thereof for making a marinade.

3. Kit of parts according to any preceding claim, wherein the additives comprise oregano, ginger, onion or mixtures thereof.

4. Kit of parts according to any preceding claim, wherein the pita bread has an elongated shape, whereby the ratio between the length and the width of the pita bread is between 1.2 to 4.0, preferably between 1.5 and 2.5.

5. Kit of parts according to any preceding claim, wherein the pita bread has a perforation along its short axis, preferably in the middle of the bread.

6. Kit of parts according to any preceding claim, wherein the pita bread has a shelf life or more than three months.

7. Kit of parts according to any preceding claim, wherein the pita bread comprises 0.1 to 1.0% of an emulsifier selected from the group of diacetyl tartaric acid ester of glycerides (DATA), monoglycerides (DATEM), calcium or sodium stearoyl lactylate.

8. Kit of parts according to any preceding claim, wherein the pita bread comprises one or more fresh-keeping amylases and xylanases in a ratio of 1 to 2 up to 10 to 1 by weight to improve softness of the crumb and prolonged softness in time.

9. Kit of parts according to any preceding claim, wherein the pita bread comprises rosemary (dried), thyme (dried), paprika red pieces (dried).

10. Kit of parts according to any preceding claim, further comprising a sealed container with salad sauce.

11. Kit of parts according to claim 10, wherein the salad sauce comprises dill, parsley, onion, cucumber flavour, pepper or mixtures thereof.

12. Process for the preparation of a kit of parts according to any preceding claim, comprising the following steps:
(1) making the pita bread;
(2) sealing the pita bread; and
(3) packaging the sealed pita bread together with a sealed container with additives for preparing a filling for said pita bread.

13. Process according to claim 12, wherein the pita bread is made by mixing 95 - 110% flour, 50 - 56% water, 1 - 4% yeast (active), 0.5 - 1.5% fat (soft), 0.9 - 1.6% herb-mix, 3.4 - 6.1% pre-mix, based on the weight of the flour.
